# EUROPEAN PATENT SPECIFICATION

(11) **EP 1 881 174 B1**
(45) Date of publication and mention of the grant of the patent: **12.01.2011**
(21) Application number: 07111797.2
(22) Date of filing: 05.07.2007
(51) Int. Cl.: F02B 67/06, F02F 7/00, F01M 13/00

(54) **Internal combustion engine**
Verbrennungsmotor
Moteur à combustion interne

(30) Priority: 29.08.2006 JP 2006232476; 20.07.2006 JP 2006198517
(43) Date of publication of application: 23.01.2008
(73) Proprietor: Honda Motor Co., Ltd., Tokyo 107-8556 (JP)
(72) Inventor: Chiba, Kazuhiko, Saitama 351-0193 (JP); Tsuchiya, Ryuji, Saitama 351-0193 (JP); Niizuma, Kenichiro, Saitama 351-0193 (JP)
(74) Representative: Rupp, Christian

(56) References cited:
- DE-A1- 10 124 318
- JP-A- 58 093 914
- JP-A- 63 243 415
- JP-A- 2002 242 649
- US-A- 5 148 784
- US-A- 6 142 129
- US-A1- 2002 017 283
- US-B1- 6 334 438

## Description

The present invention relates to an internal combustion engine including: a cam drive sprocket provided to a crankshaft rotatably supported by a crankcase; a cam driven sprocket provided to a cam shaft rotatably supported by a cylinder head coupled with the crankcase through a cylinder block; a cam chain chamber for moving an endless cam chain stretched around the cam drive sprocket and the cam driven sprocket, which extends from the crankcase to the cylinder block and further to the cylinder head; and a breather chamber communicating with an upper portion of the cam chain chamber on the crankcase side and defined in the crankcase.

An internal combustion engine as mentioned above is disclosed in Patent Document 1. In this engine, a cam drive sprocket is provided to a crankshaft outside an oil-pump-driving sprocket in an axial direction.

### [Patent Document 1] JP-A No. 2006-96194

However, in the internal combustion engine as disclosed in Patent Document 1, an engine main body has no positioning member for a cam chain, which is necessary for assembly of the cam chain with the axial line of the crankshaft set in a vertical direction, with the result that the assembly is complicated and assembling efficiency is lowered.

The present invention has been accomplished in view of the above circumstances.

It is accordingly an object of the invention to provide an internal combustion engine that facilitates assembly of a cam chain and enhances an effect of separating oil mist from a blow-by gas introduced to a breather chamber.

To attain the above object and in accordance with the present invention, an internal combustion engine with the technical features of Claim 1 is provided.

Further aspects of the invention are described in the dependent claims.

According to the invention as described in Claim 1, at the time of assembling the cam chain with the axial line of the crankshaft set in a vertical direction, the cam chain can be placed and held on the protruding wall near the cam drive sprocket, whereby the assembly of the cam chain is facilitated and assembly efficiency is improved. Moreover, the protruding wall functions as a barrier against a blow-by gas introduced from the crankcase to the breather chamber, and an effect of separating oil mist from the blow-by gas can be enhanced.

Further, according to the invention as described in Claim 3, even if the drive sprocket for driving the oil pump is provided inside the cam drive sprocket, assembly efficiently can be improved by the protruding wall preventing the cam chain from being stretched to the oil-pump-driving drive sprocket side. Furthermore, the protruding wall effectively prevents leakage of oil splashing from the drive sprocket for driving the oil pump to the breather chamber.

Hereinafter, the best modes for carrying out the invention will be described based on embodiments illustrated in the accompanying drawings.

Figs. 1 to 7 show an embodiment of the present invention.
Fig. 1 is a left-side view of a scooter type motorcycle;
Fig. 2 is an enlarged sectional view taken along the line 2-2 of Fig. 1;
Fig. 3 is an enlarged sectional view taken along the line 3-3 of Fig. 2;
Fig. 4 is an enlarged sectional view taken along the line 4-4 of Fig. 3;
Fig. 5 is an enlarged sectional view taken along the line 5-5 of Fig. 3;
Fig. 6 is an enlarged sectional view taken along the line 6-6 of Fig. 2 and
Fig. 7 is an enlarged sectional view taken along the line 7-7 of Fig. 6.

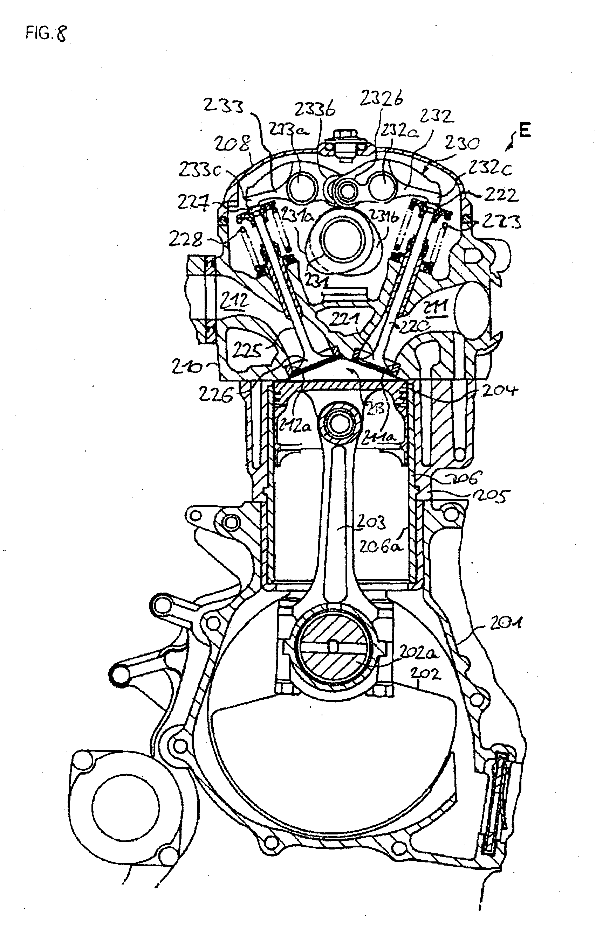

Further, Figs. 8 to 15 show an engine E having a preferred head structure.
Fig. 8 is a front sectional view of an engine having a preferred head structure;

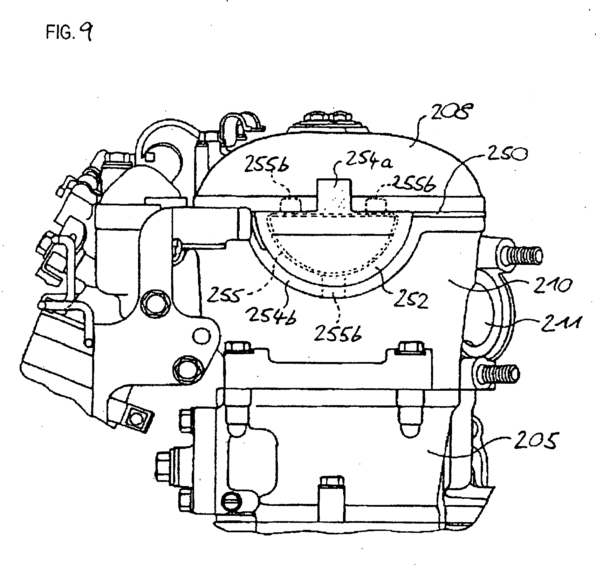

Fig. 9 is a front view of outer appearance of a head portion of the engine;

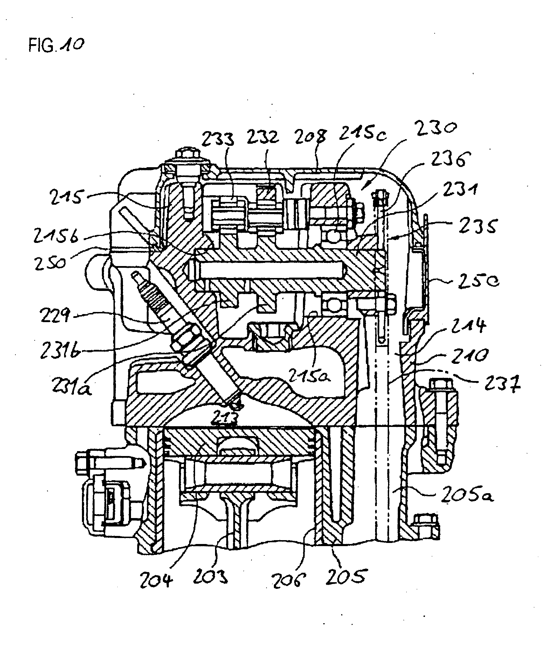

Fig. 10 is a side sectional view of an inner portion of the head portion of the engine;

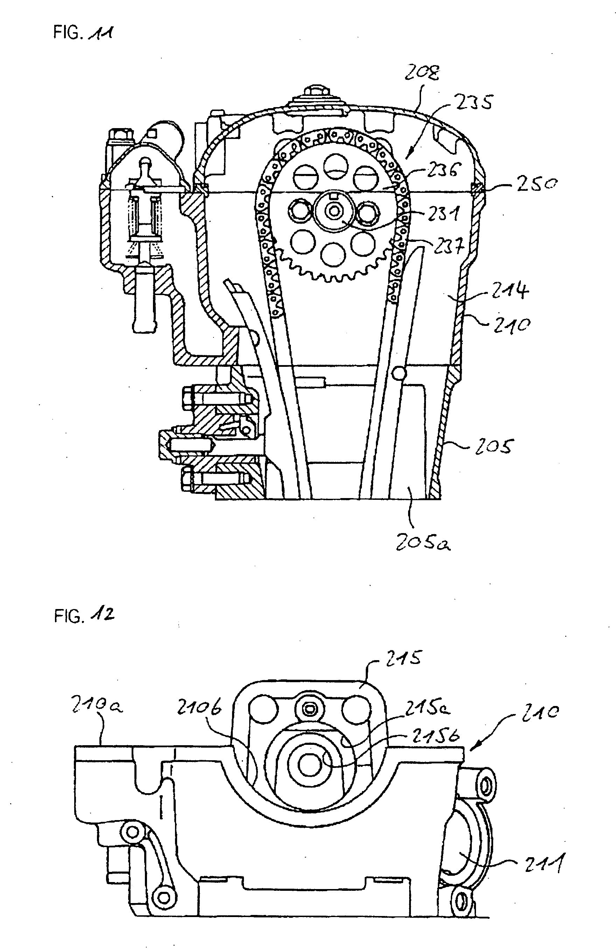

Fig. 11 is a front sectional view of an inner portion of the head portion of the engine;
Fig. 12 is a front view of a cylinder head constituting the head structure;

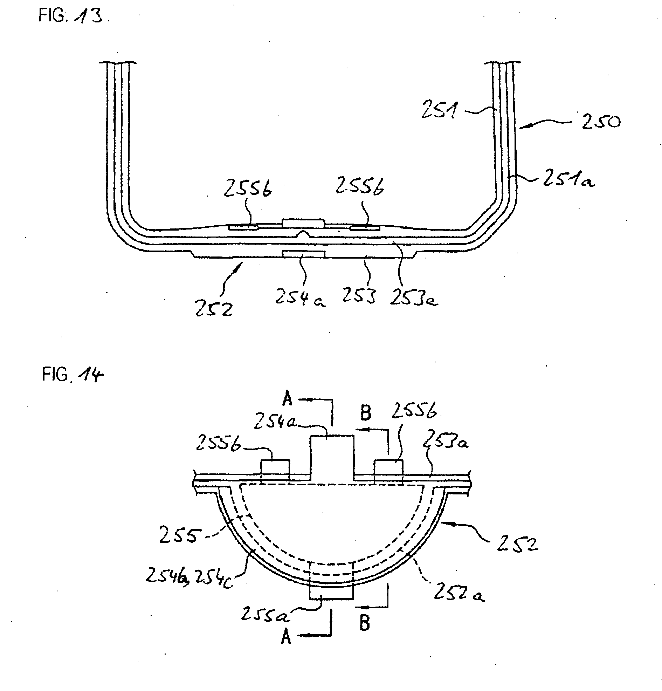

Fig. 13 is a plan view of a part of a sealing member in the head structure;
Fig. 14 is a front view of a part of the sealing member in the head structure and

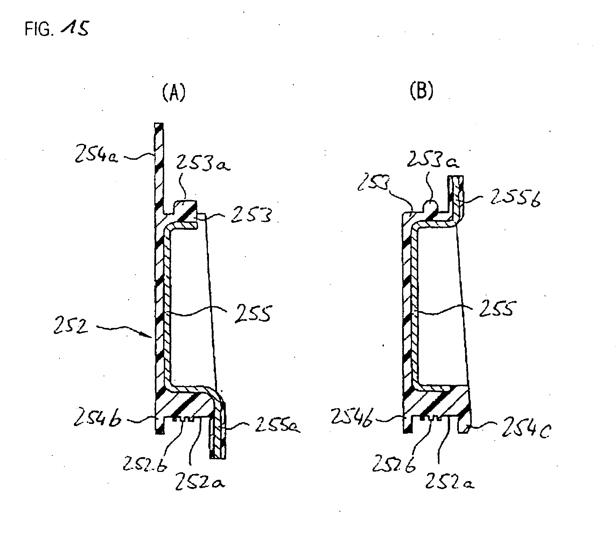

Figs. 15 are sectional views of the sealing member taken along the lines A-A and B-B of Fig. 14.

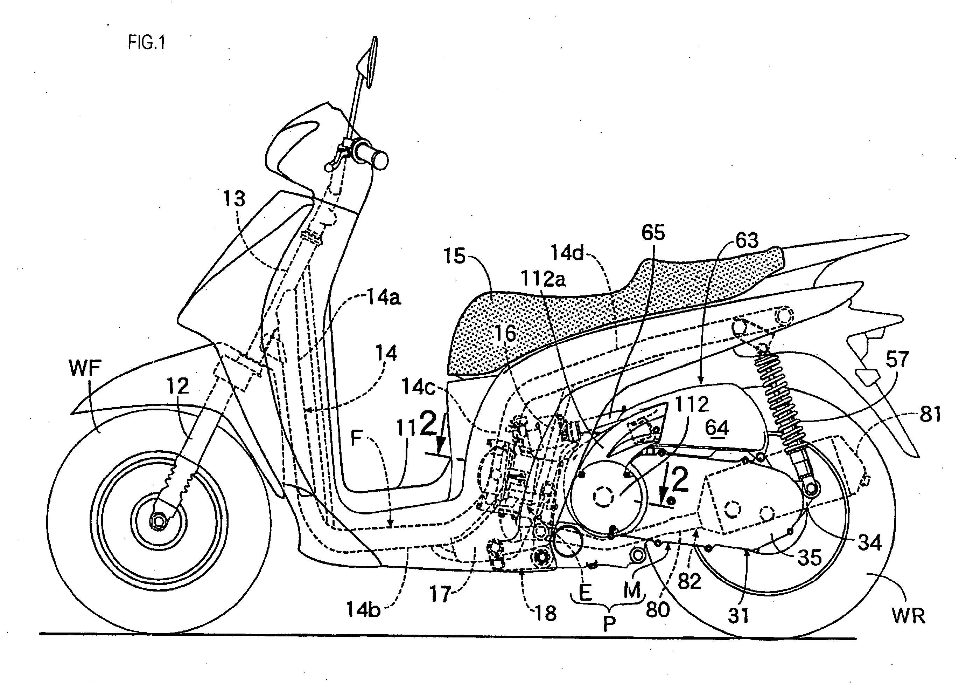

In Fig. 1, a vehicle body frame F of the scooter type motorcycle having a low floor 11 includes a head pipe 13 steerably supporting front forks 12 axially supporting a front wheel WF, and a pair of right and left side frames 14 joined to the head pipe 13 at the front end portion. The side frame 14 includes a down frame portion 14a suspending from the head pipe 13, a lower frame portion 14b continuous to the lower end of the down frame portion 14a and extending downward below the floor 11 with the rear portion sloped upward, and an erecting frame portion 14c continuous to the rear end of the lower frame portion 14b and erecting on the rear side of the floor 11, and a seat rail portion 14d extending backward from the rear end of the erecting frame portion 14c to support a seat 15, which are integrally formed. A single pipe is bent to form each part.

Each rear sub frame 16 is provided between a rear portion of each lower frame portion 14b in the side frame 14 and a front portion of each seat rail portion 14d so as to position below each lower frame portion 14b of the side frame 14 and behind each erecting frame portion 14c. Each pivot plate 17 is provided between each side frame 14 and each rear sub frame 16.

In the pivot plates 17 of the vehicle body frame F, a power unit composed of the engine E placed on the front side of the rear wheel WR and a transmission gear M placed on the left side of the rear wheel WR is vertically slidably supported through a link mechanism 18. The rear wheel WR is axially supported to the rear portion of the power unit P.

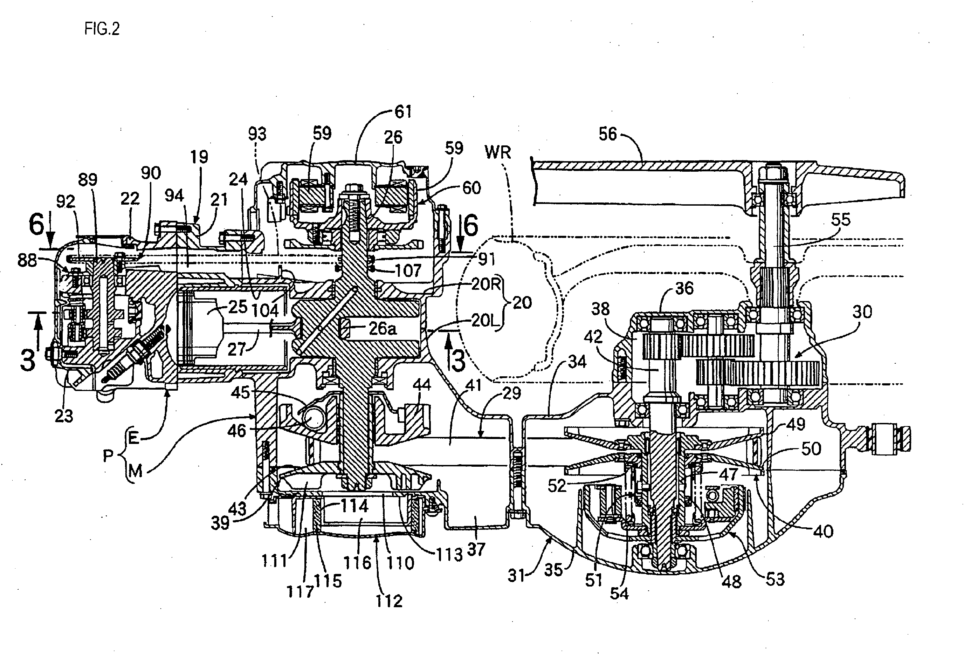

In Fig. 2, an engine main body 19 of the engine E as a single cylinder water-cooled 4-stroke-cycle internal combustion engine includes a crankcase 20 composed of right and left semi-crankcases 20L and 20R, a cylinder block 21 coupled with the crankcase 20, a cylinder head 22 coupled with the cylinder block 21, and a head cover 23 coupled with the cylinder head 22. A piston 25 is slidably inserted to a cylinder bore 24 formed in the cylinder block 21 with the cylinder axial line slightly tilted in an anterosuperior direction. The crank shaft 26 extending in the width direction of the vehicle body frame F is rotatably supported to the crankcase 20. The piston 25 is coupled with a crank pin 26a integrated with the crank shaft 26 through a connecting rod 27.

The transmission gear M is composed of a V-belt type continuously variable transmission 29 and a reducing gear train 30 reducing a speed of the continuously variable transmission 29 to transmit the rotational speed to the vehicle shaft of the rear wheel WR. The transmission gear M is accommodated in a transmission case 31 provided to the crankcase 20 and extending on the left side of the rear wheel WR.

The transmission case 31 is composed of an inner case integrally continuous to the left semi-crankcase 20L of the crankcase 20 and extending backward, an outer case 35 covering the inner case 34 from the outside, and a gear case 36 joined to a rear portion of the inner case 34. A transmission chamber 37 for accommodating the V-belt type continuously variable transmission 29 is formed between the inner case 34 and the outer case 35, and a gear chamber 38 for accommodating the reducing gear train 30 is formed between the inner case 34 and the gear case 36.

The V-belt type continuously variable transmission 29 is composed of a drive pulley 39 attached to one end of the crank shaft 26 inserted to the transmission chamber 37 from the crankcase 20, a driven pulley 40 attached to an output shaft 42 rotatably supported by the inner case 34, the outer case 35, and the gear case 36 with the axial line parallel to the crank shaft 26, and an endless V belt 41 transmitting a torque from the drive pulley 39 to the driven pulley 40.

The drive pulley 39 includes a fixed semi-pulley 43 fixed to the crank shaft 26, and a movable semi-pulley 44 that can change a distance from the fixed semi-pulley 43, and the movable semi-pulley 44 is driven in the axial direction due to centrifugal force acting on a weight 46 provided between a lamp plate 45 fixed to the crank shaft 26 and the moveable semi-pulley 44.

Further, the driven pulley 40 includes an internal cylinder 47 coaxially surrounding an output shaft 42 in a relatively rotatable manner, an external cylinder 48 slidably fitting the internal cylinder 47 such that the cylinders are relatively rotatable about and along the axial line, a fixed semi-pulley 49 fixed to the internal cylinder 47, a movable semi-pulley 50 fixed to the external cylinder 48 opposite to the fixed semi-pulley 49, a torque cam mechanism 51 provided between the internal cylinder 47 and the external cylinder 48 to apply component force in the axial direction between the semi-pulleys 49 and 50 in accordance with a difference in relative rotational phase between the movable semi-pulley 50 and the fixed semi-pulley 49, and a coil spring 52 for elastically biasing the movable semi-pulley 50 toward the fixed semi-pulley 49. The V belt 41 is stretched between the fixed semi-pulley 49 and the movable semi-pulley 50.

A centrifugal clutch 53 that can transmit a torque as the engine rpm exceeds the preset rpm is provided between the internal cylinder 47 of the driven pulley 40 and the output shaft 42. A coil spring 52 surrounding the external cylinder 48 is provided between the drive plate constituting the centrifugal clutch 53 and coaxially and relatively rotatably joined to the internal cylinder 47 and the movable semi-pulley 50.

A distance between the fixed semi-pulley 49 of the driven pulley 40 and the movable semi-pulley 50 is determined based on a relation among force generated by the torque cam mechanism 51 in the axial direction, elastic force generated by the coil spring 52 in the axial direction, and force of the V belt 41 acting to increase a distance between the fixed semi-pulley 49 and the movable semi-pulley 50. If the movable semi-pulley 44 is brought close to the fixed semi-pulley 43 and thus, a radius of the V belt 41 wound around the drive pulley 39 increases, in the drive pulley 39, a radius of the V belt 41 wound around the driven pulley 45 is reduced.

One end of the vehicle shaft 55 of the rear wheel WR is inserted to the transmission case 30 after air-tightly passed through the gear case 36. The one end of the vehicle shaft 55 is rotatably supported by the inner case 34 and the gear case 36, and the reducing gear train 30 provided between the output shaft 42 and the vehicle shaft 55 is accommodated in the gear chamber 38.

Further, a swing arm 56 integrated with the crankcase 20 of the engine main body 19 is placed on the right side of the rear wheel WR, and the other end of the vehicle shaft 55 is rotatably supported to the rear portion of the swing arm 56. As shown in Fig. 1, a rear cushion unit 57 is provided between the rear portion of the inner case 34 of the transmission case 31 and the rear portion of the left-sided seat rail portion 14d in the vehicle frame F.

Further, an outer rotor 58 is fixed to the other end of the crank shaft 26 rotatably passed through the right semi-crankcase 20R of the crankcase 20, and an inner stator 59 surrounded by the outer rotor 58 to constitute a generator 60 together with the outer rotor 58 is fixed to a right cover 61 fastened to the right semi-crankcase 20R to cover the generator 60.

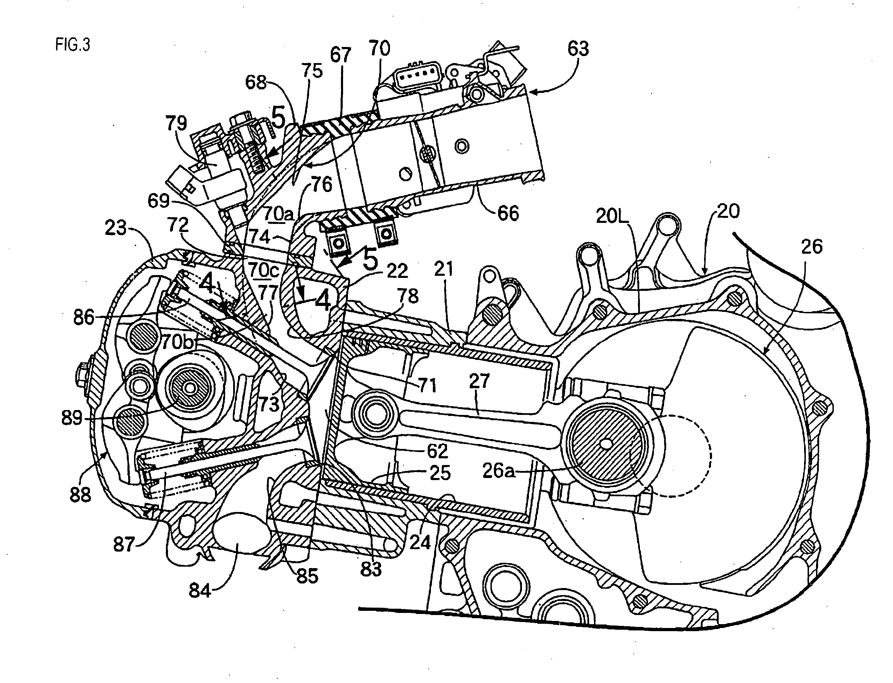

In Fig. 3, the combustion engine 62 opposite to the tip end of the piston 25 is formed between the cylinder block 21 and the cylinder head 22. An induction system 63 for supplying an air to the combustion chamber 62 is connected to the upper side wall of the cylinder head 22. The induction system 63 includes an air clear 64 (see Fig. 1) supported to the transmission case 31 and placed above the transmission case 31, a connecting tube 65 (see Fig. 1) having an upstream end connected to the air cleaner 64, a throttle body 66 connected to a downstream end of the connecting tube 65, and an inlet pipe 68 having an upstream end connected to the throttle body 66 through the connector 67. The downstream end of the inlet pipe 68 is connected to an upper side surface of the cylinder head 22 through an insulator 69.

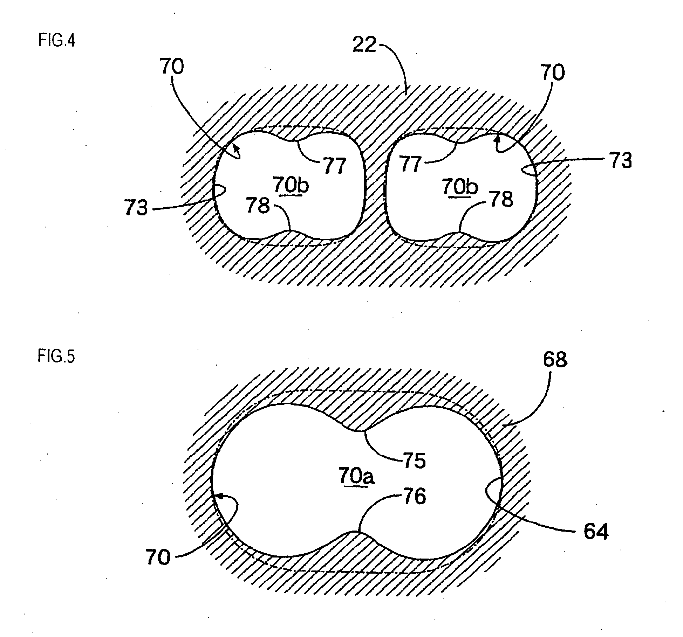

Here, the cylinder head 22 is provided with a pair of intake valve ports 71 that open to the top surface of the combustion chamber 62, a single intake port 72 that opens to the upper side surface of the cylinder head 22, and a pair of branch paths 73 branched off from the intake port 72 and communicating with the intake valve ports 71 as shown in Fig. 4. Further, a path 74 is formed in the inlet pipe 68 and the insulator 69. In addition, a pair of intake paths 70 sharing the path 74 and the intake port 72, branched off to the branch paths 73 near the combustion chamber 62, and communicating with the intake valve ports 71 extend from the inlet pipe 68 to the cylinder head 22.

In the intake paths 70, a pair of throttle portions 70a and 70b arranged with an interval in the air flow direction of the intake paths 70 and the expanding portion 70c provided between the throttle portions 70a and 70b are formed. The throttle portion 70a is shared between the intake paths 70, and the throttle portions 70b are individually formed in each intake paths 70.

Further, the intake paths 70 are formed in substantially U shape in section as viewed in projected plan orthogonal to an axial line of a crank shaft 26 and parallel to a cylinder axial line (axial line of the cylinder bore 24). The throttle portions 70a, 70b, are provided in the bent portion of the substantially U-shaped intake paths 70.

Referring also to Fig. 5, the throttle portion 70a is formed in the inlet pipe 68. The path 74 in the inlet pipe 68 and the insulator 69 basically has an elliptical shape in section with the width direction, that is, the axial line direction of the crank shaft 26 set in the longitudinal direction as indicated by the chained line of Fig. 5. Projections 75 and 76 protruding from opposite walls in a central portion in the width direction of the path 74 to approach each other are formed in the inlet pipe 68 to thereby obtain the throttle portion 70a.

On the other hand, as shown in Fig. 4, the throttle portions 70b are formed in the branch paths 73 of the cylinder head 22. As indicated by the chained line of Fig. 4, the branch paths 73 basically have an elliptical shape in section with the width direction, that is, the axial line direction of the crank shaft 26 set in the longitudinal direction. Projections 77 and 78 protruding from opposite walls in a central portion in the width direction of the branch paths 73 to approach each other are formed in the cylinder head 22 to thereby obtain the throttle portions 70b.

The expanding unit 70c is formed in the intake path 70 in accordance with the connection portion between the cylinder head 22 and the inlet pipe 68, and the fuel injection valve 79 for injecting a fuel to the expanding unit 70c is attached to the inlet pipe 68.

Further, an exhaust system 82 is connected to the lower side face of the cylinder head 22. The exhaust system 82 is connected to the lower portion of the cylinder head 22 and composed of an exhaust pipe 80 (see Fig. 1) extending from the lower right side of the engine main body 19 to the right side of the rear wheel WR, and an exhaust muffler 81 (see Fig. 1) connected to the exhaust pipe 80 and placed on the right side of the rear wheel WR.

Further, the cylinder head 22 is provided with a pair of exhaust valve ports 83 that open to the top surface of the combustion engine 62, a single exhaust port 84 that opens to a lower side face of the cylinder head 22, and a pair of branch paths 85 branched off from the exhaust port 84 and individually communicating with the exhaust valve ports 83, and the exhaust system 82 is connected to the lower side face of the cylinder head 22 to communicate with the exhaust port 84.

On the other hand, the cylinder head 22 is provided with a pair of intake valves 86 for closing/opening the intake valve ports 71, and a pair of exhaust valves 87 for opening/closing the exhaust valve ports 83. Then, a valve system 88 for opening/closing the intake valves 86 and exhaust valves 87 is accommodated in a space between the cylinder head 22 and the head cover 23. A cam shaft 89 of the valve system 88 is supported to the cylinder head 22 rotatably about the axial line parallel to the crank shaft 26.

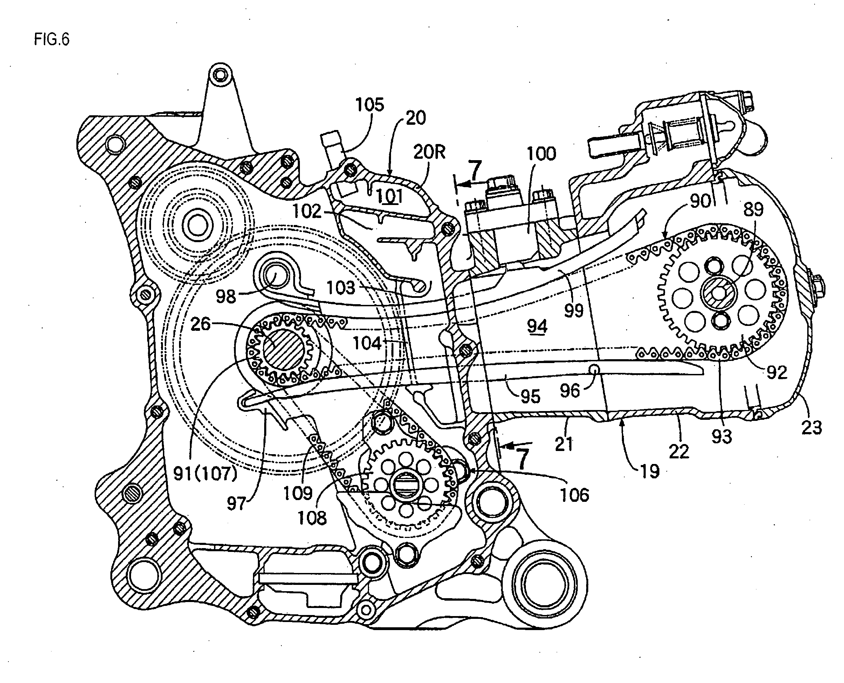

Referring also to Fig. 6, a torque from the crank shaft 26 is transmitted to the cam shaft 89 through a timing transmission mechanism 90 at a reduction gear ratio of 1/2. The timing transmission mechanism 90 includes a cam drive sprocket 91 provided to the crank shaft 26 between the right⁺ semi-crankcase 20R and the generator 60, a cam driven sprocket 92 fixed to the cam shaft 89, and an endless cam chain 93 stretched over the sprockets 91 and 92. A cam chain chamber 94 for moving the cam chain 93 extends from the crankcase 20 to the cylinder block 21 and up to the cylinder head 22.

A cam chain guide 95 comes into contact with an outer periphery of the stretched cam chain 93 between the cam drive sprocket 91 and the cam driven sprocket 92. A projection 96 of the cam chain guide 95 formed near the cam driven sprocket 92 is interposed between the cylinder block 21 and the cylinder head 22, and an end portion of the cam chain guide 95 on the cam drive sprocket 91 side is fitted and supported to a supporting portion 97 formed in the right semi-crankcase 20R of the crankcase 20.

Further, a chain tensioner 99 comes into contact with an outer periphery of the sagging cam chain 93 between the cam drive sprocket 91 and the cam driven sprocket 92, and the end portion on the cam drive sprocket 91 side is supported to the tensioner rotatably about a spindle 98 provided to the right semi-crankcase 20R. The cylinder block 21 is provided with a tensioner lifter 100 that comes into contact with the chain tensioner 99 from the opposite side of the cam chain 93.

Here, in the right case 60R of the crankcase 20, a breather chamber 101 communicating with an upper portion of the cam chain chamber 94 on the crankcase 20 side is formed, and a breather pipe 105 communicating with the breather chamber 101 is attached to the right semi-crankcase 20R. The breather chamber 101 communicates with an upper portion of the cam chain chamber 94 on the crankcase 20 side through the inlet 103 located below the breather chamber 101. A maze 102 for separating oil mist from a blow-by gas introduced from the inlet 103 is defined in the breather chamber 101.

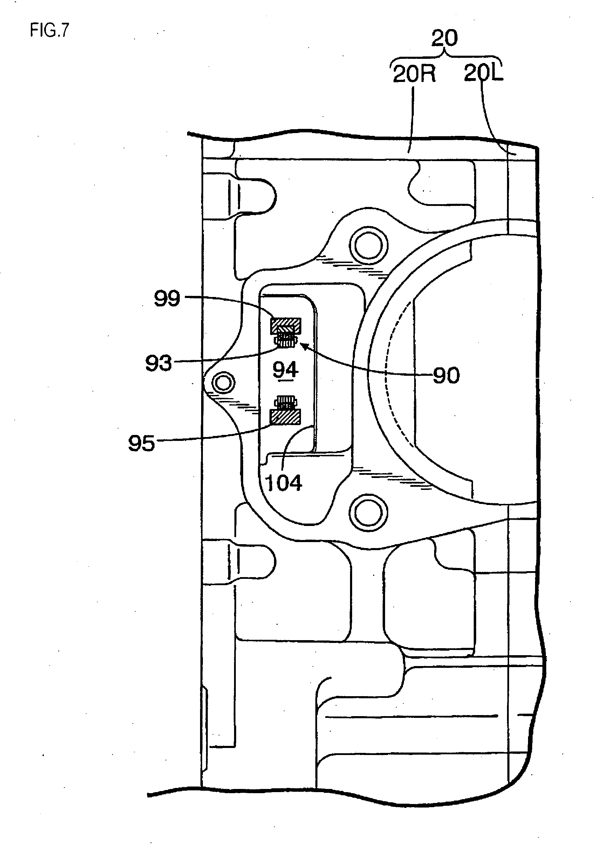

Referring also to Fig. 7, a protruding wall 104 provided at the inlet 103 that opens to the cam chain chamber 94 of the breather chamber 101 and extending orthogonally to the moving direction of the cam chain 93 is integrally protruded from the right semi-crankcase 20R of the crankcase 20 toward the cam chain 93 side.

Here, a drive sprocket 107 for accommodating and holding an oil pump 106 for pumping oil and driving the oil pump 106 is provided closer to the center portion in the axial direction of the crank shaft 26 than the cam drive sprocket 91 in the crankcase 20. The endless chain 109 is stretched around a driven sprocket 108 provided on the oil pump 106 side and the drive sprocket 107.

Referring back to Fig. 2, a cool air introducing port 110 for cooling the V-belt continuously variable transmission 29 with external air is provided in a portion corresponding to the drive pulley 39 of the outer case 35 in the transmission case 31. Further, a fan 111 for sucking air from the cool air introducing port 110 to the transmission chamber 37 is integrally formed on the outer edge surface of the fixed semi-pulley 43 of the drive pulley 39.

An outside air introducing duct 112 for introducing the outside air to the cool air introducing port 110 is attached to the outer case 35 of the transmission case 31, and a path formation portion 112a connected to the air cleaner 64 to introduce the outside air to the air cleaner 64 as shown in Fig. 1 is integrally formed in the outside air introducing duct 112.

The outside air introducing duct 112 has a cover 113 that surrounds the cool air introducing port 110 and comes into contact with the outer case 35, and a filter element 115 is endlessly wound around a support frame 114 integrally formed in the cover 113. Thus, an inner area of the outside air introducing duct 112 is segmented into a cleaning chamber 116 defined in the filter element 115 and communicating with the cool air introducing port 110 and an uncleaning chamber 117 defined outside the filter element 115. The uncleaning chamber 117 is open to the outside.

Next, operations of the embodiment are described. The breather chamber 101 is formed in the right semi-crankcase 20R of the crankcase 20. The breather chamber communicates with the upper portion of the cam chain chamber 94 on the crankcase 20 side, the cam chain chamber extending from the crankcase 20 to the cylinder block 21 and up to the cylinder head 22 to stretch the cam chain 93. The protruding wall 104 is formed at the inlet 103 that opens to the cam chain chamber 94 of the breather chamber 101. The protruding wall 140 extends orthogonally to the movement direction of the cam chain 93 in the cam chain chamber 94 and is provided to the right semi-crankcase 20R of the crankcase 20 to protrude toward the cam chain 93 side.

Accordingly, at the time of stretching the cam chain 93 under such conditions that the axial line of the crank shaft 26 is the vertical direction, the cam chain 93 can be placed and held on the protruding wall 104 near the cam drive sprocket 91. As a result, the assembly of the cam chain 93 is facilitated, and assembly efficiency is enhanced. Moreover, the protruding wall 104 also functions as a barrier against a blow-by gas introduced to the breather chamber 101 from the crankcase 20, so an effect of separating oil mist from the blow-by gas is increased.

Further, in the crankcase 20, the oil pump 106 for pumping oil is accommodated and fixed, the drive sprocket 107 for driving the oil pump 106 is provided closer to the central portion in the axial direction of the crank shaft 26 than the cam drive sprocket 91. Even if the drive sprocket 107 is placed inside the cam drive sprocket 91, it is possible to prevent the cam chain 93 from reaching the drive sprocket 107 side with the protruding wall 104. Hence, assembly efficiency is improved. In addition, the protruding wall 104 effectively prevents leakage of oil from the drive sprocket 107 to the breather chamber 101.

Further, the intake paths 70 communicating with the intake valve ports 71 provided in the cylinder head 22 to open to the top surface of the combustion chamber 62 extend from the inlet pipe 68 to the cylinder head 22. In the intake paths 70, a pair of throttle portions 70a, 70b, arranged with an interval in an air flow direction of the intake paths 70 and an expanding portion 70c positioned between the throttle portions 70a, 70b, are formed.

Accordingly, a cross-sectional area of the intake paths 70 is sequentially changed such as reduced, expanded, reduced, and expanded in the air flow direction. Thus, it is possible to increase an intake flow rate due to reduction in cross-sectional area and increase an intake air amount due to expansion in cross-sectional area in a balanced manner. As a result, filling efficiency is improved to increase power.

Further, the fuel injection valve 79 for injecting a fuel to the expanding portion 70c is provided to the inlet pipe 68, and a fuel is injected from the fuel injection valve 79 to the expanding portion 70c of the intake paths 70, so it is possible to suppress change in intake air flow rate due to nozzle arrangement of the fuel injection valve 79 as much as possible.

Further, since the expanding unit 70c corresponds to the connection portion between the cylinder head 22 and the inlet pipe 68 connected to the cylinder head 22, even if the cylinder head 22 and the inlet pipe 68 are separate members, a connection port diameter can be set relatively large, and parts can be easily processed and assembled.

Further, the throttle portions 70a, 70b, are provided to a bent portion of the intake paths 70 formed in substantially U shape in section as viewed in a projected plan orthogonal to an axial line of the crank shaft 26 and parallel to a cylinder axial line, so the intake paths 70 can be made compact and a cross-sectional area of the intake paths 70 can be largely changed by arranging the throttle portions 70a, 70b, in the bent portion.

For further explanations and referring now to Figs. 8 to 15, an engine E having an preferred head structure is described in the following. This engine head structure includes: a cylinder block including a cylinder chamber to which a piston is inserted; a cylinder head provided above the cylinder block to cover an opening of the cylinder chamber on the opposite side of a piston head and including a cam chain chamber that opens to an upper side; a head cover attached onto an upper end surface of the cylinder head to cover the cam chain chamber; and a sealing member filled in a space between the upper end surface of the cylinder head and the head cover to seal the space, wherein a recess is formed in the upper end surface of the cylinder head to form a bearing of a camshaft, and the sealing member is integrated with a protruding sealing portion made of an elastic material and fitted in the recess, and the protruding sealing portion includes a metal-made reinforcing member. Since the sealing member for sealing a gap between the cylinder head and the head cover is integrated with the protruding sealing portion made of an elastic material to fill the recess and the protruding sealing portion made of an elastic material is reinforced by a metal-made reinforcing member, even if an external (or internal) force is applied to the protruding sealing portion, the sealing portion is hardly deformed, and it is possible to improve a sealing property and effectively prevent the protruding sealing portion from being peeled off.

In this engine head structure, preferably, the recess has a semicircular shape in section, the protruding sealing portion is made of a semicircular elastic material fitted in the recess, and the reinforcing member is formed in a semicircular shape corresponding to the shape of the protruding sealing portion. It is thus possible to easily process the member and effectively reinforce the protruding sealing portion made of an elastic material.

It is further preferred that the protruding sealing portion and the reinforcing member include an upwardly protruding flange portion at inner and outer edges, and under such conditions that the protruding sealing portion is pressed into the recess portion and the sealing member is caught in between the upper end surface of the cylinder head and the head cover, the inner and outer flange portions catch hold of the head cover from the inner side and the outer side. With this structure, it is possible to prevent the protruding sealing portion from moving relative to the head cover to securely prevent the sealing portion from peeling off to improve sealing property.

Further, it is preferred that the flange portion formed in the protruding sealing portion be positioned outside the head cover and the flange portion formed in the reinforcing member be positioned inside the head cover. The protruding sealing portion can thus be securely held against the force pushing the protruding sealing portion outward in accordance with an internal pressure of the cam chain chamber.

Further, it is preferred that the flange portion formed in the protruding sealing portion protrude upward more than the flange portion formed in the reinforcing member does. In this way, it is possible to easily deform outwardly the protruding sealing portion made of an elastic material and attach the head cover. Thus, the head cover can be easily assembled while preventing the protruding sealing portion from intruding into the cam chain chamber.

The engine E includes a crankcase 201 where a crankshaft 202 is held, a cylinder block 205 bonded to an upper end of the crankcase 201, a cylinder head 210 bonded to an upper end of the cylinder block 205, and a head cover bonded to an upper end of the cylinder head 210. In the engine, various engine components are arranged. In the cylinder block 205, a cylinder liner 206 is inserted. A piston 204 is inserted into a cylindrical cylinder hole 206a of the cylinder liner 206 slidably in the axial direction. The piston 204 is coupled with a crank portion 202a of the crankshaft 202 through a connecting rod 203.

A combustion chamber recess 213 is formed in a lower surface of the cylinder head 210, and in the cylinder head 210, an exhaust path 211 having an exhaust port 211a that opens to the recess 213 and an intake path 212 having an intake port 212a are formed. An exhaust valve 220 and an intake valve 225 are attached to the cylinder head 210 as shown in Fig. 8 such that lower valve portions 221 and 226 can open/close the exhaust and intake ports 211a and 212a. The exhaust valve 220 and the intake valve 225 are biased to close by valve springs 223 and 228. Under such conditions that no external force is applied, valve portions 221 and 226 close the exhaust and intake ports 211a and 212a while being biased by the valve springs 223 and 228. Further, as shown in Fig. 10, a plug portion is protruded in the combustion chamber recess 213, and a spark plug 229 is secured to the cylinder head 210.

As shown in Fig. 10, a cam chain chamber 214 having a recess that opens to an upper side is formed on the upper surface side of the cylinder head 210, and an overhead type cam mechanism 230 is placed in the chamber. The cam chain chamber 214 communicates with a cam chain arrangement space 205a passed through the right-handed inner portion of Fig. 10 in the vertical direction and passed through the side portion of the cylinder block 205 in the vertical direction. A driven sprocket 236 and a chain 237 constituting the cam chain mechanism 235 are arranged therein. Incidentally, Fig. 12 is a front view of the cylinder head 210 alone. As shown in Fig. 12, a mounting portion 215 for attaching the cam mechanism 230 protrudes upward in a head cover space (protrudes upward beyond a bonded surface 210a between the head and the head cover 208).

The cam mechanism 230 includes a camshaft 231 rotatably held to the mounting portion 215 and exhaust and intake rocker arms 232 and 233 rocked by the camshaft 231. Exhaust and intake cam portions 231a and 231b are formed in two positions of an outer peripheral surface of the camshaft 231. A shaft tip end is rotatably inserted to a mounting hole 215b formed in the mounting portion 215, and a shaft middle portion is rotatably supported in the mounting hole 215a through a bearing 215c. In this way, the shaft is mounted to the mounting portion 215a. Central portions 232a and 233a of the exhaust and intake rocker arms 232 and 233 are pivotally connected to the mounting portion 215 and swingably attached thereto. Then, cam followers 232b and 233b formed at one end come into contact with the exhaust and intake cam portions 231a and 231b, and pressing portions 232c and 233c formed at the other end come into contact with upper abutment portions 222 and 227 of the exhaust valve 220 and the intake valve 225.

With the thus-structured cam mechanism 230, when the camshaft 231 is rotated, the exhaust and intake cam portions 231a and 231b push up the cam followers 232b and 233b at a predetermined timing to rock the exhaust and intake rocker arms 232 and 233. Then, the pressing portions 232c and 233c come into abutment against upper abutment portions 222 and 227 of the exhaust valve 220 and the intake valve 225 to push down the portions, and the valve portions 221 and 226 open the exhaust and intake ports 211a and 212a.

The exhaust and intake ports 211a and 212a are opened in step with reciprocating motion of the piston 204 in accordance with rotation of the crankshaft 202. Therefore, a chain 237 is stretched around a drive sprocket (not shown) attached to the crankshaft 202. The chain 237 is stretched around the driven sprocket 236 attached to the end of the cam shaft 231, and the cam shaft 231 is rotated in sync with rotation of the crankshaft 202.

The head cover 208 is attached to cover the upper surface side of the cylinder head 210 with the cam mechanism 230 mounted thereto. Incidentally, at this time, a sealing member 250 as described later is interposed between the head cover and the cylinder head to seal a gap therebetween to prevent inner oil from leaking to the outside.

Now, as shown in Fig. 12, the mounting portion 215 of the cylinder head 210 protrudes upward beyond the bonded surface 210a between the head and the head cover 208; it is desirable to reduce a protruding amount as much as possible to downsize the engine. Hence, a semicircular recess 210b is formed at one end of the bonded surface 210a of the cylinder head 210, and a tool is inserted through the recess 210b to machine the mounting holes 215a and 215b for mounting the cam shaft 231. With this structure, the cam shaft 231 is set in a lower position and the height of the engine is limited to downsize the engine. However, it is unnecessary to fill and seal the recess 210b.

To that end, in the engine E, the sealing member 250 structured as shown in Figs. 13 and 15 is interposed between the cylinder head 210 and the head cover 208 to securely seal a gap including the recess 210b between the head and the cover. The sealing member 250 is mounted above the bonded surface 210a between the cylinder head and the cover to surround the cam chain chamber 214. The sealing member is integrated with the flat sealing portion 251 interposed between the lower surface of the head cover and the head and the protruded sealing portion 252 fitted in the recess 210b.

The flat sealing portion 251 is made of an elastic material and formed into a plate-like shape. A linear protrusion 251 is formed in the longitudinal direction on the upper surface of the sealing portion 251. The protrusion 205a is fitted in a linear recess (not shown) formed in the lower surface of the head cover 208. Incidentally, an upper seal surface 253 of the protruding sealing portion 252 is continuous to the upper surface of the flat sealing portion 251 and flush therewith. Thus, the linear protrusion 253a formed thereon is continuous to the protrusion 251a, and the flat sealing portion 251 and the upper seal surface 253 are integrally continuous above the bonded surface 210a of the cylinder head 210 to surround the cam chain chamber 214.

The protruding sealing portion 252 is formed in a semicircular shape in section, which corresponds to the recess 210b of the cylinder head 210, and the portion 252 protrudes downward from the upper seal surface 253. The outer surface and upper and lower surfaces of the protruding sealing portion 252 are made of the same elastic material as a material of the flat sealing portion 251, and a metal reinforcing member 255 of a semicircular shape in section is integrally formed on the inner side. A first tongue-like flange portion 254a is formed outside the upper seal surface 253 of the protruding sealing portion 252 and extends upward. Second and third flange portions 254b and 254c are formed inside and outside the semicylindrical outer peripheral surface 252a of the protruding sealing portion 252 and extend outward. Incidentally, plural ring-like small projections 252b are formed on the semicylindrical outer peripheral surface 252a. When the protruding sealing portion 252 is inserted to the recess 210b, the small projections 252b come into contact with an inner peripheral surface of the recess 210b to realize high sealing property.

On the other hand, the reinforcing plate 255 is bent inwardly at an upper end portion, and fourth flange portions 255b and 255b protruding upward are formed in two positions of the inner end of the upper seal surface 253. Likewise, the reinforcing plate 255 is bent inwardly at a lower end portion, and a fifth flange portion 255a protruding downward is formed at an inner end of the semicylindrical outer peripheral surface 252a.

An operation of mounting the thus-structured sealing member 250 is described next. The sealing member 250 is mounted by placing the flat sealing portion 251 on the bonded surface 210a of the cylinder head and inserting the protruding sealing portion 252 into the recess 210b. At this time, the second and third flange portions 254b and 254c catch hold of the wall that forms the recess 210b of the cylinder head 210 from inner and outer sides to thereby securely mount the protruding sealing portion 252 to the recess 210. At this time, the fifth flange portion 255a of the reinforcing plate 255 is opposite to the inner wall of the recess 210b of the cylinder head 210 in contact therewith.

After mounting the sealing member 250 onto the bonded surface 210a of the cylinder head 210 and the recess 210b in this way, the head cover 208 is placed thereon. At this time, when an operator pulls the first flange portion 254a made of an elastic material outward, the head cover 208 can be readily mounted on the cylinder head 210. In the case where the head cover 208 is placed this way, the linear projections 251a and 253a on the upper surface of the sealing member 250 are fitted into a linear recess (not shown) formed in the lower surface of the head cover 208. Furthermore, the fourth flange portions 255b and 255b come into abutment against the inner wall of the head cover 208 face to face. The first flange portion 254a comes into abutment against the outer wall face to face. That is, the first flange portion 254a and the fourth flange portions 255b and 255b sandwich the wall portion of the head cover 208 from the inner side and the outer side.

As described above, in such a state that the sealing member is interposed between the upper surface of the cylinder head 210 and the lower surface of the head cover 208, the recess 210b is securely sealed with the protruding sealing member 252. At this time, the protruding sealing member 252 is integrated with the flat sealing portion 251, so there is no fear that the protruding sealing members 252 is peeled off or loosened due to external force. In particular, since the fourth and fifth flange portions 255b and 255a of the reinforcing plate 255 are brought into contact with the inner wall surfaces of the head cover 208 and the cylinder head 210, even if applied with an inner pressure of the cam chain chamber 214, the protruding sealing portion 252 is not peeled off or loosened, and high sealing property is kept.

The embodiment of the present invention is described above, but the present invention is not limited to the above embodiment, and various modifications and changes can be made without departing from the scope of the invention.

### Description of Reference Numerals:

- E: Engine
- 20: Crankcase
- 21: Cylinder block
- 22: Cylinder head
- 26: Crankshaft
- 89: Cam shaft
- 91: Cam drive sprocket
- 92: Cam driven sprocket
- 93: Cam chain
- 94: Cam chain chamber
- 101: Breather chamber
- 103: Inlet
- 104: Protruding wall
- 106: Oil pump
- 107: Drive sprocket for driving oil pump

## Claims

1. An internal combustion engine, comprising:
a cam drive sprocket (91) provided to a crankshaft (26) rotatably supported by a crankcase (20);
a cam driven sprocket (92) provided to a cam shaft (89) rotatably supported by a cylinder head (22) coupled with the crankcase (20) through a cylinder block (21);
a cam chain chamber (94) for moving an endless cam chain (93) stretched around the cam drive sprocket (91) and the cam driven sprocket (92), the cam chain chamber (94) extending from the crankcase (20) to the cylinder block (21) and further to the cylinder head (22); and
a breather chamber (101) communicating with an upper portion of the cam chain chamber (94) on the crankcase (20) side and defined in the crankcase (20),
**characterized in that**
the crankcase (20) is provided with a protruding wall (104) in the form of protruding to the cam chain (93),
the protruding wall (104) being positioned at an inlet (103) that opens to the cam chain chamber (94) of the breather chamber (101) and crossing a movement direction of the cam chain (93),
the protruding wall (104) is integrally protruded from the wall of the crankcase (20) to protrude toward the cam chain (93) side.

2. The internal combustion engine according to Claim 1 wherein the protruding wall (104) is protruded from the crankcase (20) at the side of a cylinder bore (24) to the cam chain (93).

3. The internal combustion engine according to any of the preceding claims, further comprising:
a drive sprocket (107) for driving an oil pump (106) accommodated and fixed to the crankcase (20) to pump an oil, the drive sprocket (107) being provided closer to the center in an axial direction of the crankshaft (26) than the cam drive sprocket (91), and the protruding wall (104) is protruded nearby the radial axis of the drive sprocket (107) in the axial direction of the crankshaft (26).

## Patentansprüche

1. Verbrennungsmotor, der aufweist:
ein Nockenantriebskettenrad (91), das an einer Kurbelwelle (26) bereitgestellt ist, die von einem Kurbelgehäuse (20) drehbar gelagert ist;
ein angetriebenes Nockenkettenrad (92), das an einer Nockenwelle (89) bereitgestellt ist, die drehbar von einem Zylinderkopf (22) gelagert ist, der durch einen Zylinderblock (21) mit dem Kurbelgehäuse (20) gekoppelt ist;
eine Nockenkettenkammer (94) zum Bewegen einer endlosen Nockenkette (93), die um das Nockenantriebskettenrad (91) und das angetriebene Nockenkettenrad (92), gespannt ist, wobei die Kettenkammer (94) sich von dem Kurbelgehäuse (20) zu dem Zylinderblock (21) und weiter zu dem Zylinderkopf (22) erstreckt; und
eine Lüftungskammer (101), die mit einem oberen Abschnitt der Nockenkettenkammer (94) auf der Seite des Kurbelgehäuses (20) in Verbindung steht und in dem Kurbelgehäuse (20) definiert ist,
**dadurch gekennzeichnet, dass**
das Kurbelgehäuse (20) mit einer vorstehenden Wand (104) in der zu der Nockenkette (93) vorstehenden Form versehen ist,
wobei die vorstehende Wand (104) an einem Einlass (103) positioniert ist, der sich zu der Nockenkettenkammer (94) der Lüftungskammer (101) öffnet und
eine Bewegungsrichtung der Nockenkette (93) kreuzt,
die vorstehende Wand (104) integral von der Wand des Kurbelgehäuses (20) vorsteht, um in Richtung der Seite der Nockenkette (93) vorzustehen.

2. Verbrennungsmotor nach Anspruch 1, wobei die vorstehende Wand (104) auf der Seite einer Zylinderbohrung (24) von dem Kurbelgehäuse (20) zu der Nockenkette (93) vorsteht.

3. Verbrennungsmotor nach einem der vorhergehenden Ansprüche, der ferner aufweist:
ein Antriebskettenrad (107) zum Antreiben einer Ölpumpe (106), die in dem Kurbelgehäuse (20) untergebracht und daran befestigt ist, um ein Öl zu pumpen, wobei das Antriebskettenrad (107) näher an der Mitte in einer Axialrichtung der Kurbelwelle (26) bereitgestellt ist als das Nockenantriebskettenrad (91) und die vorstehende Wand (104) in der Nähe der Radialachse des Antriebskettenrads (107) in der Axialrichtung der Kurbelwelle (26) vorsteht.

## Revendications

1. Moteur à combustion interne, comprenant :
un pignon à chaîne d'entraînement de came (91) fourni sur un vilebrequin (26) supporté de manière à pouvoir tourner par un carter (20) ;
un pignon à chaîne entraîné par came (92) fourni sur un arbre à cames (89) supporté de manière à pouvoir tourner par une culasse (22) couplée au carter (20) à travers un bloc-cylindres (21) ;
une chambre de chaîne de came (94) pour déplacer une chaîne de came sans fin (93) étirée autour du pignon à chaîne d'entraînement de came (91) et du pignon à chaîne entraîné de came (92), la chambre de chaîne de came (94) s'étendant du carter (20) au bloc-cylindres (21) et jusqu'à la culasse (22) ; et
une chambre de reniflard (101) communiquant avec une partie supérieure de la chambre de chaîne de came (94) sur le côté du carter (20) et définie dans le carter (20),
**caractérisé en ce que**
le carter (20) est pourvu d'une paroi saillante (104) sous la forme d'une protubérance de la chaîne de came (93),
la paroi saillante (104) étant positionnée à une entrée (103) qui s'ouvre dans la chambre de chaîne de came (94) de la chambre de reniflard (101) et croisant une direction de déplacement de la chaîne de came (93),
la paroi saillante (104) fait intégralement saillie de la paroi du carter (20) vers le côté de la chaîne de came (93).

2. Moteur à combustion interne selon la revendication 1, dans lequel la paroi saillante (104) fait saillie du carter (20) au niveau du côté d'un alésage de cylindre (24) jusqu'à la chaîne de came (93).

3. Moteur à combustion interne selon l'une quelconque des revendications précédentes, comprenant en outre :
un pignon à chaîne d'entraînement (107) pour entraîner une pompe à huile (106) agencée et fixée sur le carter (20) pour pomper de l'huile, le pignon à chaîne d'entraînement (107) étant disposé plus près du centre dans une direction axiale du vilebrequin (26) que le pignon à chaîne d'entraînement de came (91), et la paroi saillante (104) fait saillie à proximité de l'axe radial du pignon à chaîne d'entraînement (107) dans la direction axiale du vilebrequin (26).
